**Europäisches Patentamt**

**European Patent Office**

**Office européen des brevets**

(19)

(11) Veröffentlichungsnummer: **0 264 405 B1**

# (12) EUROPÄISCHE PATENTSCHRIFT

(45) Veröffentlichungstag der Patentschrift:
**27.02.91 Patentblatt 91/09**

(51) Int. Cl.$^5$: **H04N 1/387**

(21) Anmeldenummer: **87902416.4**

(22) Anmeldetag: **01.05.87**

(86) Internationale Anmeldenummer:
**PCT/DE87/00194**

(87) Internationale Veröffentlichungsnummer:
**WO 87/06789 05.11.87 Gazette 87/24**

(54) **VERFAHREN UND EINRICHTUNG ZUR ELEKTRONISCHEN SEITENKOMBINATION FÜR DIE REPRODUKTIONSTECHNIK.**

(30) Priorität: **02.05.86 DE 3614790**

(43) Veröffentlichungstag der Anmeldung:
**27.04.88 Patentblatt 88/17**

(45) Bekanntmachung des Hinweises auf die Patenterteilung:
**27.02.91 Patentblatt 91/09**

(84) Benannte Vertragsstaaten:
**AT CH DE FR GB IT LI**

(56) Entgegenhaltungen:
**DE-A- 2 827 596**
**DE-A- 3 223 730**
**FR-A- 2 505 518**
**GB-A- 2 123 647**
**US-A- 4 476 497**

(73) Patentinhaber: **DR.-ING. RUDOLF HELL GmbH**
**Grenzstrasse 1-5**
**D-2300 Kiel 14 (DE)**

(72) Erfinder: **SING, Gerhard**
**Rinkenberg 52**
**D-2314 Schönkirchen (DE)**

EP 0 264 405 B1

**Beschreibung**

Die vorliegende Erfindung betrifft ein Verfahren und eine Einrichtung zur elektronischen Seitenmontage für die Reproduktionstechnik, wobei das Aufzeichnen der einzelnen Seiten auf einem Aufzeichnungsträger mittels eines Recorders erfolgt, der eine elektronische Rasterungseinheit mit einem Mehrspur-aufzeichnungsorgan aufweist, dessen Auflösung feiner ist als die Auflösung der Bildinformation, wobei vor der Aufzeichnung einer gesamten Endseite die Seitenmontage in Teilflächen aufgeteilt wird, in denen, entsprechend einem Layout, Bilder, Texte oder künstlich generierte Bildinformationen mittels des Recorders mit der feineren Auflösung aufgezeichnet werden.

In der Reproduktionstechnik werden Kombinationen von Bildern, Schriften, Signets usw. in beliebiger Anordnung und Überlappung entsprechend einem Layout zu einer Endseite zusammengestellt. Derartige Kombinationen wurden bisher – außer auf konventionelle Art – nur off-line an vollelektronischen Systemen mit erheblichem Zeitaufwand ausgeführt, wobei die einzelnen Bilder oder Textteile vollständig abgespeichert vorliegen und entsprechend dem Layout einzeln in einen Kurzspeicher übertragen werden. Siehe hierzu z. B. DE-A 33 42 947 oder DE-C 21 61 038. Wie solche Kombinationen im einzelnen durchgeführt werden, ist z. B. aus DE-C 21 37 676 zu ersehen.

Die DE-A 32 23 730 beschreibt ein Verfahren zum Zusammensetzen und Wiedergeben eines Bildes und eines Buchstabens unter Verwendung von Bildsignalen und Buchstabensignalen zur Anwendung in einer Bildreproduziermaschine, bei dem eine Umschaltung zwischen Bildsignal und Schriftsignal erfolgt. Es ist eine elektronische Rasterungseinheit mit einem Mehrspur-Aufzeichnungsorgan, das mehrere Schreibspuren aufweist, vorgesehen, mit dem bei Bildaufzeichnung die einzelnen Rasterpunkte derart erzeugt werden, daß die einzelnen Schreibspuren des Mehrspur-Aufzeichnungsorgans separat angesteuert werden. Eine solche Rasterungseinheit ist z. B. auch in DE-A 21 07 738 beschrieben.

Die Rasterungseinheit gemäß Fig. 8 von DE-A 32 23 730 besteht aus einer Steuereinheit, in der Ansteuersignale für die einzelnen Schreibspuren erzeugt werden, die bestimmen, ob der Lichtstrahl einer Schreibspur eingeschaltet wird oder nicht.

Die Bildinformation wird durch Rasterpunkte wiedergegeben, die als zusammenhängender Fleck aus mehreren parallelen Schreibspuren gebildet werden. Die Textinformation wird dadurch aufgezeichnet, daß zur Erzeugung der Buchstaben die einzelnen Schreibspuren an den Konturen der Buchstaben hell und dunkel getastet werden. Um eine Kombination von Text- und Bildinformationen zu erhalten, sind in den Steuerleitungen, die von der Steuereinheit an die einzelnen Schreibspuren gehen, OR-Gatter vorgesehen. Je nach Ansteuerung dieser OR-Gatter werden also Rasterpunkte oder reine Schwarz-Weiß-Informationen durch das Aufzeichnungsorgan aufgezeichnet. Hierzu ist eine Gruppe der Eingänge der OR-Tore mit der Steuereinheit der Rastereinheit verbunden, die andere Gruppe von Eingängen der OR-Gatter wird von der Textinformation beaufschlagt. Je nachdem, welche Gruppe von Eingängen aktiviert wird, wird also Bild oder Text aufgezeichnet.

Der Zeitpunkt des Schaltens der OR-Gatter bestimmt die örtliche Begrenzung zwischen den Bild- und Textteilen. Mit dieser Schaltungsanordnung ist es also nur möglich, zwischen einem Text und einem Bild bzw. Bildteil zu wählen, da die OR-Gatter nur diese beiden Wahlmöglichkeiten zulassen.

In der Reproduktionstechnik besteht aber häufig der Wunsch, nicht nur zwischen einem Bild und Text umzuschalten, sondern häufig wird gefordert, eine Vielzahl von Bildern oder Bildteilen mit mehreren Textteilen oder einzelnen Buchstaben oder Texte mit Bildinhalt, Verlaufsinformation oder mit konstantem Tonwert zu kombinieren. Dies ist aber mit der in DE-A 32 23 730 gezeigten Anordnung nicht möglich.

Es ist weiterhin aus "Druckwelt", Nov. '85, Seiten 45 und 46, bekannt, mittels Bild-Text-Systemen eine Bild-Text-Verarbeitung und Ganzseitenaufzeichnung vorzunehmen. Mit Mikroprozessoren bringt man Bilder und Text einer vorher komplett gestalteten Seite durch parallele Bearbeitung auf eine Linie, d. h. eine Scanlinie, die mittels eines Lasersetters aufgezeichnet wird. Mit Hilfe eines sog. Layoutprogrammers, im vorliegenden Fall das Gerät "Layoutprogrammer LP 307" der Fa. Dr.-Ing. Rudolf Hell GmbH, Kiel, BRD, werden Layout und Scanparameter erfaßt und auf einem Monitor dargestellt. Nachteil dieses Systems ist, daß die Layoutdaten von der Auflösung her dieselbe Auflösung wie die abgetasteten Bildinformationen haben, was in der Bildkombination innerhalb der Endseite zu einer Vertreppung an den Konturen zwischen zwei Bilddetails führt. Auch können mit diesem System nur rechtwinklige Masken innerhalb des Layouts erstellt werden, woraus sich ergibt, daß das System von der Qualität und auch von der Geometrie der Masken her begrenzt ist.

Der Erfindung liegt daher die Aufgabe zugrunde, ein Verfahren und eine Einrichtung zur elektronischen Seitenkombination anzugeben, mit dem beliebig viele Bilder, Texte oder sonstige Graphiken bzw. Bildteile, Textteile oder Signets gemäß einem Layout in beliebiger Form zusammengesetzt werden können.

Die Erfindung erreicht dies durch die im kennzeichnenden Teil des Anspruchs 1 angegebenen Merkmale. Vorteilhafte Weiterbildungen der Erfindung sind in den Unteransprüchen 2 bis 8 angegeben.

Die Erfindung wird im folgenden anhand der Fig. 1 bis 3 näher erläutert. Es zeigen :

Fig. 1 ein Beispiel einer aus Bild und Text zusammengesetzten Seite,

Fig. 1a ein Beispiel für die Auflösung eines Schriftzeichens in Konturdaten,

Fig. 1b ein Beispiel für die Auflösung von Bilderteilen in Konturdaten,

Fig. 2 ein Blockschaltbild eines Recorders zur Herstellung von Seitenkombinationen und

Fig. 3 eine Schaltungsanordnung zur Durchführung der Erfindung.

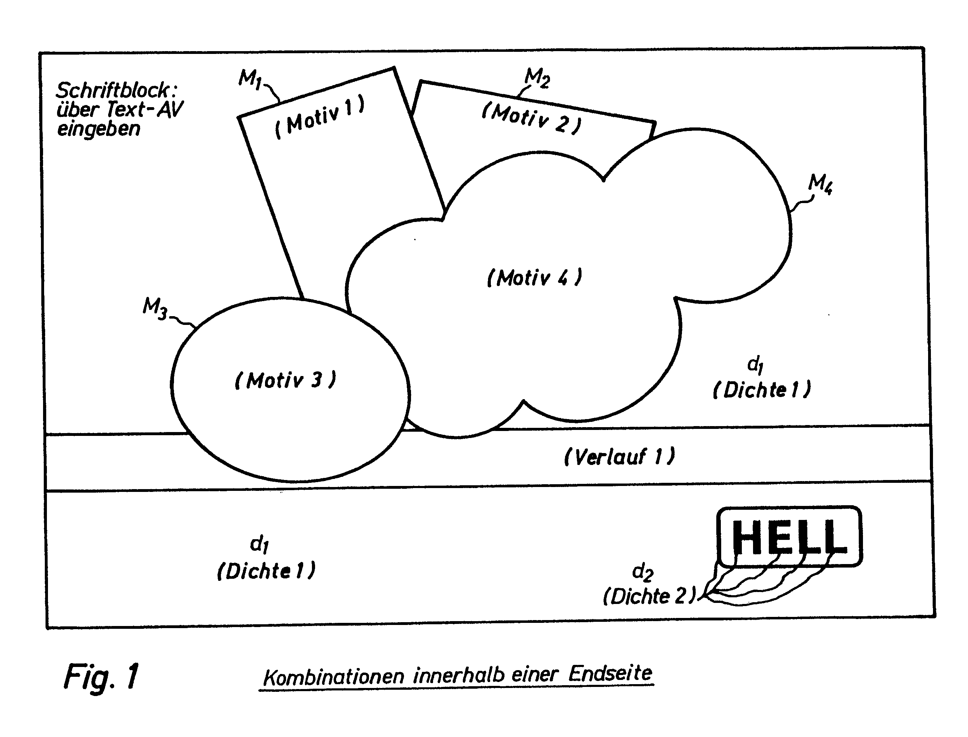

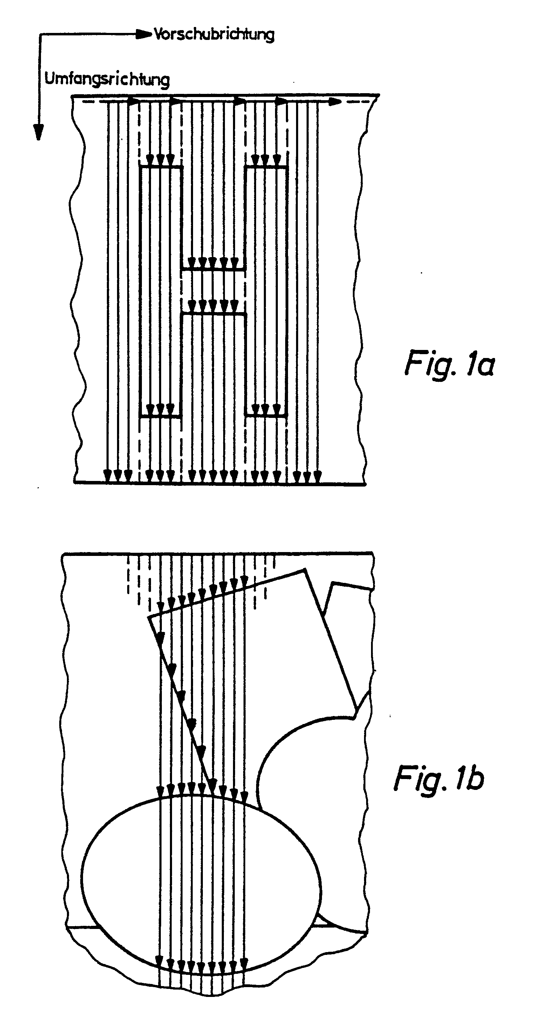

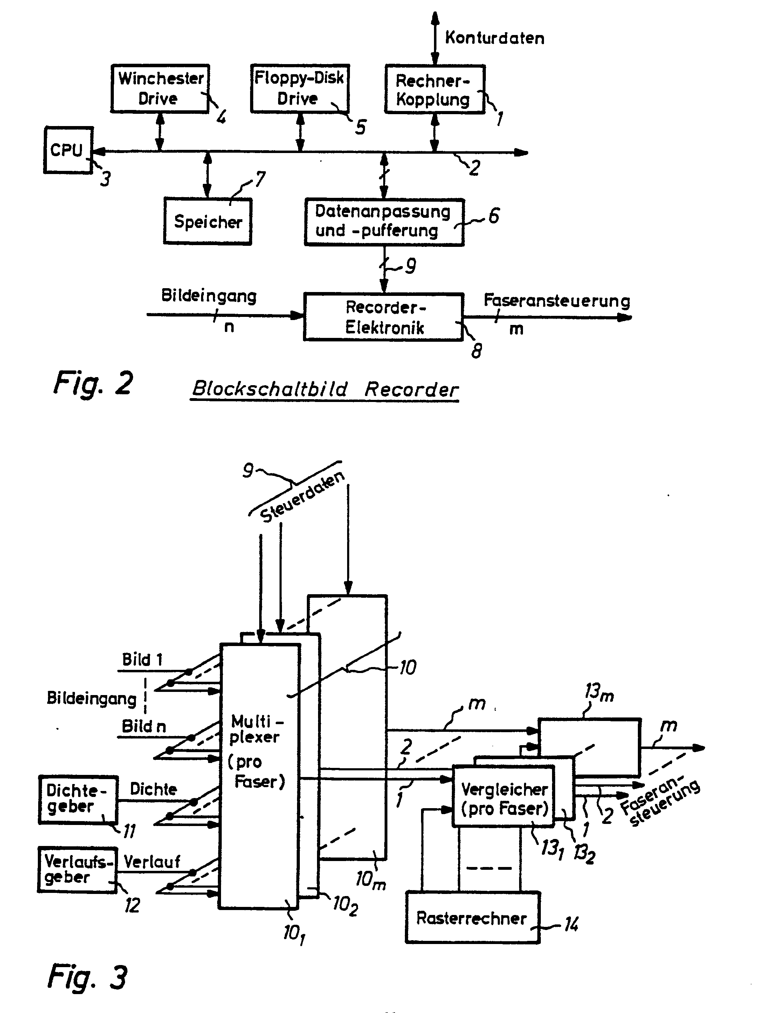

Fig. 1 zeigt eine Seite, die aus mehreren Text- und Bildteilen zusammengestellt ist. Es sind mehrere Motive $M_1$, $M_2$, $M_3$ und $M_4$ vorhanden. Der Hintergrund der Motive möge die Dichte $d_1$, das Schriftsegment "HELL" die Dichte $d_2$ und das Feld, in dem das Signet "HELL" steht, die Dichte $d_1$ haben. In der Schrift "HELL" könnte auch statt der Dichte $d_2$ ein Motiv als Hintergrund erscheinen. Außerdem ist in der linken oberen Ecke ein Schriftblock vorhanden. Wie aus diesem Beispiel zu ersehen ist, überlappen sich die Motive, und durch das Layout werden die einzelnen Bereiche und die Positionen der einzelnen Teile, aus denen die endgültige Seite zusammengesetzt ist, festgelegt.

Um solche Kombinationen dann in der Praxis durchführen zu können, wird im folgenden anhand der Figuren 2 und 3 eine Einrichtung beschrieben, mit der dies sehr flexibel und schnell im online-Betrieb realisiert werden kann. Hierbei wird ein an sich bekannter Recorder zum Aufzeichnen von Farbauszügen mit einer Einrichtung ausgestattet, die es erlaubt, mittels durch Form und Position innerhalb der Endseite definierter Konturen online auf die aufzuzeichnende Bildinformation steuernd einzuwirken. Hierbei ist die geometrische Auflösung der Konturensteuerinformation um ein Vielfaches größer als die geometrische Auflösung der eingegebenen Bildinformation, sowohl in Vorschub- als auch in Umfangsrichtung getrennt.

Unter Konturinformation sind bei der vorliegenden Erfindung Daten gemeint, die Lage und Umrandung eines Bild- oder Textteils innerhalb der Seite angeben, und zwar in einer Auflösung, die wesentlich feiner ist als die Auflösung der abgetasteten Bildinformation, die aber von der Bildinformation getrennt ist. Solche Konturdaten können auf verschiedene Weise gewonnen werden, z. B. über eine Eingabestation für Geometrie, d. h. Layout, eine Eingabestation für Schriftcodes oder eine Eingabestation für Strichinformation. Diese Gewinnung der Konturdaten wird auch mit AV, d. h. Arbeitsvorbereitung, bezeichnet, wozu spezielle Geräte entwickelt worden sind. Zur Layouteingabe wird beispielsweise auf das Gerät Layoutprogrammer LP 307, Bestellnummer 2121 (1d-S-8702) der Firma Dr.-Ing. Hell GmbH, Kiel, Bundesrepublik Deutschland, verwiesen. Mit diesem Gerät können sogenannte "Composings" erfaßt werden, wozu umfangreiche Montagearbeiten durchgeführt werden. Für Kataloggestaltung werden viele Einzelfotos zu einem solchen Composing zusammengefaßt, wozu unter Bildschirmanzeige mit einem Digitizer geometrische Figuren beliebiger Form generiert oder Farbflächen angelegt werden können.

Eine weitere Möglichkeit der Gewinnung von Konturdaten kann eine Eingabestation für Schrift oder eine Eingabestation für Strich, z. B. zur Abtastung von Signets oder sonstigen Strichinformationen sein.

Fig. 2 zeigt einen prinzipiellen Aufbau an einer solchen konturfähigen Recordereinheit. Die Konturdaten können über ein transportables Speichermedium, z. B. eine Floppy Disk, die auch zum Archivieren der Konturdaten dienen kann, oder über eine direkt verdrahtete Rechnerkopplung von den Steuerprozessoren der AV-Station zum Recorder eingegeben werden.

In Fig. 2 ist eine solche Rechnerkopplung 1 gezeigt, die an ein Bus-System 2 angeschlossen ist, das wiederum von einem Zentralprozessor (CPU) 3 gesteuert wird. Der Zentralprozessor steuert über den Bus 2 die Rechnerkopplung 1, ein Plattenlaufwerk (Winchester Drive) 4, ein Floppy-Disk-Laufwerk 5 und eine Einheit 6 zur Datenanpassung an die Recorderelektronik 8, die zusätzlich eine Datenpufferung vornimmt und über eine Vielfachleitung 9 mit der Recorderelektronik verbunden ist. Außerdem ist ein Speicher 7 vorgesehen, der das Programm des zentralen Prozessors 3 enthält. Die Konturdaten gelangen von der Rechnerkopplung 1 oder von der Floppy Disk 7 zum Plattenlaufwerk 4.

Von dort aus werden die Konturdaten prozessorgesteuert über die Datenanpassungseinheit 6 ausgegeben. In der Datenanpassungseinheit wird auch die zeitliche Entkopplung der Prozessorgeschwindigkeit von der Recorderelektronik durch elastische Pufferung durchgeführt, so daß eine Synchronisation der Ausgabedaten der Datenanpassungseinheit mit der Aufzeichnungsgeschwindigkeit des Recorders gegeben ist.

Beim Belichtungsvorgang stellt die Kombination aus dem Plattenlaufwerk 4, dem CPU-Speicher 7 und der Datenanpassungseinheit 6 ein mehrstufiges FIFO (first in, first out) dar. Die Konturdaten bestehen aus Lauflängen in Vorschubrichtung des Recorders, aus Lauflängen in Umfangsrichtung der Aufzeichnungstrommel des Recorders und aus Steuerdaten, welche angeben, welche Signalquelle aufgezeichnet werden soll. Vorschubrichtung und Umfangsrichtung der Aufzeichnungstrommel bei einem Trommel-Recorder entsprechen bei einem Recorder mit Flachbettaufzeichnung den x, y-Koordinaten des Aufzeichnungsmediums. Die Konturdaten gelangen vom Plattenlaufwerk 4 zum Speicher 7, wobei mittels eines Programms die Decodierung der Vorschublauflängen erfolgt. Die Decodierung der Umfangslauflängen geschieht hardwaremäßig in der Datenanpassungseinheit mittels eines Decodierers. Diese Art der Verarbeitung von Lauflängen ist in der Satztechnik beim Setzen von Schrift-, zeichen bekannt, weshalb hier nicht im einzelnen darauf eingegangen wird.

Die Fig. 1a zeigt am beispiel des Buchstabens "H" aus dem Signet der Fig. 1, wie ein Schriftzeichen in solche Lauflängen zerlegt wird. Die Vorschubrichtung der Aufzeichnung ist in Fig. 1a in der Horizontalen und die Umfangsrichtung der Aufzeichnung in der Vertikalen angegeben. Die Richtungen können aber auch umgekehrt definiert werden. Wie aus Fig. 1a zu ersehen, kann so ein Schriftzeichen oder auch, wie Fig. 1b zeigt, ein Bild in Lauflängen zerlegt werden. Wie aus Fig. 1b ersichtlich, ist bei schräg zur Vorschubrichtung verlaufenden Konturen die Vorschublauflänge jeweils 1, wogegen bei Konturen, die in Vorschubrichtung verlaufen, die Vorschublauflänge immer so lang ist, bis der nächste Informationswechsel auftritt.

Als Ergebnis der Decodierung liegen die Informationswechsel in Umfangsrichtung, d. h. die Lauflängen entlang einer Umfangslinie vor, wobei jede Lauflänge durch die Steuerinformation mit einer Information behaftet ist, die angibt, welches Motiv jeweils aufgezeichnet werden soll, d. h. welche Informationsquelle dieser Umfangslinie zugeordnet ist.

Zu bemerken ist noch, daß die Auflösung der Konturdaten entsprechend der in den Fig. 1a und 1b gezeigten Lauflängen nicht dieselbe sein muß wie bei den Schreibspuren des Mehrspuraufzeichnungsorgans, das Verhältnis muß nur ganzzahlig sein. Eine Anpassung an die Anzahl der Schreibspuren kann durch den Prozessor 3 erfolgen.

Die Recorderelektronik ist in Fig. 2 nur als einzelner Block mit n Bildeingängen und m Ausgängen gezeigt, wird aber in Fig. 3 im einzelnen näher dargestellt.

In Fig. 3 gelangen die Steuerdaten für die Recorderelektronik über die Vielfachleitung 9 an einen Vielfachmultiplexer 10, der maximal so viele Multiplexer $10_1$ bis $10_n$ aufweist, wie das Mehrspuraufzeichnungsorgan Schreibspuren hat. Im Falle, daß die einzelnen Schreibspuren, wie in DE-A 21 07 738, als ansteuerbare Lichtleiter ausgebildet sind, wird jede Faser einzeln angesteuert.

Jeder Multiplexer $10_1$ bis $10_m$ kann beliebig viele Eingänge aufweisen, d. h. so viele Eingänge wie Informationssignalquellen vorgesehen sind, die miteinander kombiniert werden sollen. Im vorliegenden Falle sind es 1 bis n Eingänge für Bilder, Verlaufsoder Dichtegeber, wobei einzelne Eingänge fest zugeordnet werden können, was z. B. in Fig. 3 derart dargestellt ist, daß ein Eingang speziell für Dichtevorgaben mit einem Dichtegeber 11 und ein anderer Eingang mit einem Verlaufsgeber 12 fest verbunden ist. Es können aber genauso die Dichtegeber bzw. die Verlaufgeber an die anderen Bildeingänge 1 bis n angeschlossen werden oder umgekehrt. Wie hieraus zu ersehen ist, ist das Verfahren äußerst flexibel was die Kombination der Eingangsinformationen angeht, da jeder Lauflänge in Umfangsrichtung jede der Eingangsinformationsquellen zugeordnet werden kann.

Die Ausgänge der Multiplexer $10_1$ bis $10_n$ bilden die Eingänge für die Rasterungseinheit, wie sie beispielsweise in der DE-C 28 27 596 beschrieben ist. Die Rastereinheit besitzt für jede Aufzeichnungsspur einen Vergleicher ($13_1$ bis $13_m$), der mit dem Rasterrechner 14 verbunden ist. Die Vergleicher $13_1$ bis $13_m$ vergleichen ihr Eingangssignal mit einem Rastersignal, das von dem Rasterrechner 14 erzeugt wird, wobei durch den Vergleich entschieden wird, ob die zugeordnete Aufzeichnungsspur hell oder dunkel getastet wird. Anstelle der Lichtleiterfasern können selbstverständlich andere Mehrspuraufzeichnungsorgane verwendet werden, so z. B. akusto-optische Modulatoren, wobei dann der Vergleicher entscheidet, ob die einzelnen Teilstrahlen des Modulators hell oder dunkel getastet werden.

Für eine bestimmte Anzahl von auf der Endseite zu kombinierenden Bildern muß nicht die entprechende Anzahl von Bildeingängen am Recorder vorhanden sein. Vielmehr kann durch mehrfache aufeinanderfolgende Belichtungsvorgänge – wobei jeweils die noch zu belichtenden Flächenelemente, wie in einem für rechteckige Bildausschnitte bekannten Verfahren, freigelassen werden – dasselbe Ergebnis erreicht werden.

Damit ist die Kombination von beliebig vielen Bildern, Dichten und Verläufen mit beliebigen Konturen zu einer Endseite ohne kostenaufwendige Ganzbildspeicherung der Endseiten online mit Belichtungsgeschwindigkeit möglich.

Es können aber selbstverständlich bereits fertige Kombinationen von Bildern oder Texten ebenfalls wiederum mit anderen Bild-, Text- oder Strichinformationen kombiniert werden, da beliebig viele Multiplexer-Eingänge vorgesehen sein können. Die Kombination kann aber, wie bereits erwähnt, auch durch Mehrfachbelichtung erfolgen.

**Ansprüche**

1. Verfahren zur elektronischen Seitenmontage für die Reproduktionstechnik unter Aufzeichnung der Seiten auf einem Aufzeichnungsträger mittels eines Recorders, der eine elektronische Rasterungseinheit mit einem Mehrspur-Aufzeichnungsorgan aufweist, die eine Auflösung zur Aufzeichnung der Rasterpunkte hat, die feiner ist als die Auflösung derabgetasteten Bildinformation, wobei vor der Aufzeichnung einer gesamten Endseite die Seitenmontage in Teilflächen aufgeteilt wird, in denen, entsprechend einem Layout, Bilder, Texte oder künstlich generierte Bildinformationen mittels des Recorders aufgezeichnet werden, dadurch gekennzeichnet, daß

1.1 das Layout in einer Auflösung, die feiner ist als die Bildauflösung, als Konturdaten erfaßt wird, wobei die Konturdaten aus Steuerdaten und Geometriedaten bestehen, die einerseits angeben, welche Signalquelle aufgezeichnet werden soll sowie geometrisch festlegen, wo die einzelnen Steuerdaten innerhalb der Endseite der Seitenmontage entsprechend dem Layout wirksam werden sollen,

1.2 die Steuerdaten mittels der Geometriedaten in der Auflösung der Konturdaten in eine zeitliche Folge gebracht werden, die mit der Aufzeichnungsgeschwindigkeit des Recorders synchronisiert ist, wobei die zeitliche Folge der Steuerdaten bestimmt, welche Signalquelle an welchem Ort aufgezeichnet werden soll,

1.3 die zeitliche Folge von Steuerdaten an das Mehrspur-Aufzeichnungsorgan angelegt wird, wobei die jeweilige Signalquelle Dichtewerte an das Mehrspur-Aufzeichnungsorgan liefert, die eine Auflösung haben, die der Auflösung der Bildabtastung entspricht, und daß

1.4 für jede Aufzeichnungsspur in der Rasterauflösung des Mehrspur-Aufzeichnungsorgans der Dichtewert, der von der jeweiligen Signalquelle geliefert wird, mit der Rasterinformation verglichen wird, wobei die Ausgangssignale der Vergleiche die Belichtungssignale liefern.

2. Verfahren nach Anspruch 1, dadurch gekennzeichnet, daß mehrere Multiplexer vorgesehen sind, daß die zeitliche Folge von Steuerdaten für jeden Multiplexer ein Steuersignal aufweist, das entsprechend der Zuordnung der Signalquellen zu den einzelnen Bildflächen der Endseite für jeden Ort der Aufzeichnungsfläche den einzelnen Multiplexereingang an die Rasterungseinheit durchschaltet, wobei zu jedem Zeitpunkt für jedes Aufzeichnungsorgan einer Schreibspur die Signalquelle durchgeschaltet wird, die zu der betreffenden Teilfläche innerhalb des Layouts gehört.

3. Verfahren nach Anspruch 1 oder 2, dadurch gekennzeichnet, daß eine oder mehrere Rechnereinrichtungen zum Umsetzen der Konturdaten, die aus Geometrie- und Steuerdaten bestehen, in die zeitliche Folge von Steuersignalen für die Multiplexer vorgesehen sind.

4. Verfahren nach Anspruch 1 oder 2, dadurch gekennzeichnet, daß eine oder mehrere Rechnereinrichtungen zum Umsetzen der Layoutdaten in Konturdaten, die aus Geometrie- und Steuerdaten bestehen, sowie zum Umsetzen der Konturdaten in die zeitliche Folge von Steuersignalen für die Multiplexer vorgesehen sind.

5. Verfahren nach Anspruch 3 oder 4, dadurch gekennzeichnet, daß die Rechnereinrichtung über einen Datenpuffer, der von einem Prozessor derart gesteuert wird, daß die Ausgaberate des Datenpuffers an die Eingaberate des Recorders angeglichen ist, mit dem Multiplexer verbunden ist.

6. Einrichtung zur elektronischen Seitenmontage für die Reproduktionstechnik mit einer Layout-Erfassungseinrichtung und einem Recorder, der eine elektronische Rasterungseinheit mit einem Mehrspur-Aufzeichnungsorgan aufweist, dessen Rasterauflösung feiner ist als die Auflösung der abgetasteten Bildinformation, wobei die elektronische Rasterungseinheit aus einem Rasterrechner und einer solchen Anzahl von Vergleichern besteht, wie das Mehrspuraufzeichnungsorgan Schreibspuren aufweist, gekennzeichnet durch,

6.1 einen Prozessor zur Ansteuerung des Recorders, in dem die von der Layout-Erfassungseinrichtung gelieferten Layout-Informationen, die als Konturdaten in Form von Geometrie- und Steuerdaten in einer Auflösung vorliegen, die feiner ist als die Bildauflösung, in eine zeitliche Folge von Steuerdaten in derselben Auflösung wie die Konturdaten umgewandelt werden,

6.2 eine Datenanpassungs- und Puffereinrichtung zur Anpassung der von dem Prozessor gelieferten Folge von Steuerdaten an die Recorder-Eingangssteuerung und zur Datenpufferung der vom Prozessor gelieferten Steuersignale an die Arbeitsgeschwindigkeit des Recorders,

6.3 eine im Recordereingang der Rasterungseinheit vorgeschaltete Multiplexer-Einheit mit so viel Multiplexern, wie die Auflösung der Konturdaten ist, wobei jeder Multiplexer eine solche Anzahl von Eingängen aufweist, wie Signalquellen für die elektronische Seitenmontage benötigt werden, wobei durch die von dem Prozessor gelieferten Steuerdaten für jede Aufzeichnungsspur bestimmt wird, welcher Multiplexereingang, d. h. welche Datenquelle jeweils vom Multiplexer an eine Aufzeichnungsspur durchgeschaltet wird, und wobei durch einen Vergleicher in der Rastereinheit zwischen dem jeweiligen Multiplexer-Ausgangssignal und einem Rastersignal bestimmt wird, ob die betreffende Spur des Mehrspuraufzeichnungsorgans eingeschaltet wird oder nicht.

7. Einrichtung nach Anspruch 6, dadurch gekennzeichnet, daß der Prozessor mit einem Datenbus in Verbindung steht, an den eine Eingabeeinheit für die Layout-Information, ein Speicher für die Prozeßsteuerung und Speicherung der ankommenden Layout-Informationen und eine Datenanpassungs- und Pufferungs-Einheit für den Recorder angeschlossen sind.

## Claims

1. Method for electronic page make-up for reproduction technology, with the recording of the pages on a recording carrier by means of a recorder, which has an electronic definition unit with a multi-track recording element, and which has a resolution for the recording of the screen points, which is finer than the resolution of the scanned image data, wherein before the recording of an entire final page, the page make-up is divided into partial areas, in which, corresponding to a layout, pictures, texts or synthetically generated image data are recorded by means of the recorder, characterized in that

1.1 the layout, in a resolution which is finer than the image resolution, is picked up as contour data, wherein the contour data consist of control data and geometry data, which on the one hand indicate which signal source is to be recorded and also establish geometrically where the individual control data are to become effective within the final page of the page make-up corresponding to the layout,

1.2 the control data are brought into a chronological sequence by means of the geometry data in the resolution of the contour data, which sequence is synchronized with the recording speed of the recorder, wherein the chronological sequence of the control data determines which signal source is to be recorded at which location,

1.3 the chronological sequence of control data is applied to the multi-track recording element, wherein the respective signal source delivers density values to the multi-track recording element, which have a resolution which corresponds to the resolution of the image scanning, and that

1.4 for each recording track in the screen resolution of the multitrack recording element, the density value which is delivered from the respective signal source is compared with the screen data, wherein the initial signals of the comparisons deliver the exposure signals.

2. Method according to Claim 1, characterized in that several multiplexers are provided, that the chronological sequence of control data has a control signal for each multiplexer, which signal corresponding to the association of the signal sources to the individual image areas of the final page for each location of the recording area connects the individual multiplexer input to the definition unit, wherein at every instant for every recording element of a writing track, the signal source is connected, which belongs to the respective partial area within the layout.

3. Method according to Claim 1 or 2, characterized in that one or more computer devices are provided, for the conversion of the contour data, which consist of geometry- and control data, into the chronological sequence of control signals for the multiplexers.

4. Method according to Claim 1 or 2, characterized in that one ore more computer devices are provided, for the conversion of the layout data into contour data, which consists of geometry- and control data, and also for the conversion of the contour data into the chronological sequence of control signals for the multiplexers.

5. Method according to Claim 3 or 4, characterized in that the computer device is connected with the multiplexer via a data buffer, which is controlled by a processor such that the output rate of the data buffer is equated with the input rate of the recorder.

6. Device for electronic page make-up for reproduction technology, with a layout pick-up device and with a recorder, which has an electronic definition unit with a multi-track recording element, the screen resolution of which is finer than the resolution of the scanned image data, wherein the electronic definition unit consists of a screen computer and as many comparators as the multi-track recording member has writing tracks, characterized by

6.1 a processor for the controlling of the recorder, in which the layout data, delivered from the layout pick-up device, which are present as contour data in the form of geometry- and control data in a resolution which is finer than the image resolution, are converted into a chronological sequence of control data in the same resolution as the contour data,

6.2 a data adaptation- and buffer device for the adaptation of the sequence of control data delivered from the processor to the recorder input control and for the data buffering of the control signals delivered from the processor to the operating speed of the recorder,

6.3 a multiplexer unit, connected in front of the definition unit in the recorder input, with as many multiplexers as is the resolution of the contour data, wherein each multiplexer has as many inputs as signal sources required for the electronic page make-up, wherein through the control data delivered from the processor for each recording track it is determined which multiplexer input, i.e. which data source in each case is connected from the multiplexer to a recording track, and wherein through a comparator in the screen unit between the respective multiplexer output signal and a screen signal it is determined whether the respective track of the multi-track recording element is connected in or not.

7. Device according to Claim 6, characterized in that the processor is in communication with a data bus, to which are connected an input unit for the layout data, a memory for the process control and storage of the incoming layout data and a data adaption- and buffering unit for the recorder.

## Revendications

1. Procédé électronique d'assemblage de pages pour la reproduction en inscrivant des pages sur un support d'inscription à l'aide d'un enregistreur comprenant une unité de tramage électronique avec un organe d'inscription à traces multiples ayant une résolution d'inscription des points de trame plus fine que la résolution de l'information d'image détectée, et où avant l'inscription de toute une page on subdivise l'assemblage de pages en surfaces partielles dans lesquelles en fonction d'une maquette on inscrit des images, des textes ou des informations d'images de synthèse à l'aide de l'enregistreur, procédé caractérisé en ce que :

1.1 on détecte la maquette suivant une résolution plus fine que celle de l'image, sous la forme de données de contour, ces données de contour se composant de données de commande et de données géométriques qui indiquent, d'une part, les sources de signaux à inscrire, et, d'autre part, fixent de manière géométrique l'endroit où les différentes données de commande à l'intérieur de la page de l'assemblage de pages doivent agir selon la maquette,

1.2 les données de commande sont mises dans un ordre chronologique à l'aide des données géométriques suivant la résolution des données de contour, cette suite étant synchronisée à la vitesse d'inscription de l'enregistreur et la suite chronologique des données de commande détermine les endroits où doivent être inscrites les différentes source de signaux,

1.3 la suite chronologique des données de commande est fournie à l'organe d'inscription à traces multiples, la source de signaux respective fournissant les valeurs de densité à l'organe d'inscription à traces multiples, ayant une résolution correspondant à la résolution de la détection d'image et en ce que :

1.4 pour chaque trace d'inscription suivant la résolution de trame de l'organe d'inscription à traces multiples on fournit la valeur de densité donnée par la source de signaux respective, qui est comparée à l'information de trame et les signaux de sortie des comparaisons fournissent les signaux d'insolation.

2. Procédé selon la revendication 1, caractérisé par plusieurs multiplexeurs et parce que la suite chronologique des données de commande de chaque multiplexeur comporte un signal de commande qui, suivant l'association des sources de signaux à différentes surfaces d'images de la page assemblée, commute pour chaque emplacement de la surface d'inscription, l'entrée de multiplexage correspondant à l'unité de tramage et à chaque instant, pour chaque organe d'inscription d'une trace d'écriture, on branche la source de signaux correspondant à la surface partielle respective à l'intérieur de la maquette.

3. Procédé selon la revendication 1 ou 2, caractérisé par une ou plusieurs installations de calcul pour convertir les données de contour composées de données géométriques et de données de commande en une suite chronologique de signaux de commande destinés au multiplexeurs.

4. Procédé selon la revendication 1 ou 2, caractérisé par une ou plusieurs installations de calcul pour convertir les données de la maquette en des données de contour comprenant des données géométriques et des données de commande et servant aussi pour convertir les données de contour en une suite chronologique de signaux de commande destinés aux multiplexeurs.

5. Procédé selon la revendication 3 ou 4, caractérisé en ce que l'installation de calcul est commandée par un processeur par l'intermédiaire d'un tampon de donnée de manière que le débit de sortie du tampon de données soit adapté au débit d'entrée de l'enregistreur auquel est relié le multiplexeur.

6. Installation d'assemblage électronique de pages pour la reproduction à l'aide d'une installation de détection de maquette et d'un enregistreur comprenant une unité électronique de tramage et un organe d'inscription à traces multiples dont la résolution de la trame est plus fine que la résolution de l'information d'image détectée, l'unité de tramage électronique se composant d'un calculateur de trame et d'autant de comparateurs que l'organe d'inscription à traces multiples comporte de traces d'écriture, caracterisée par :

6.1 un processeur pour commander l'enregistreur contenant les informations de maquette fournies par l'installation de détection de maquette et constituées par des données de contour sous la forme de données géométriques et de données de commande selon une résolution plus fine que la résolution plus fine que la résolution de l'image pour être transformées en une suite chronologique de données de commande ayant la même résolution que les données de contour,

6.2 une installation d'adaptation de données et de tampon de données pour adapter la suite de données de commande fournie par le processeur à l'entrée de commande de l'enregistreur et pour stocker provisoirement les signaux de commande fournis par le processeur à la vitesse de fonctionnement de l'enregistreur,

6.3 une unité de multiplexage en amont de l'entrée de l'enregistreur dans l'unité de tramage, cette unité de multiplexage comportant autant de multiplexeurs que la résolution des données de contour et chaque multiplexeur comporte autant d'entrées que les sources de signaux nécessaires pour l'assemblage électronique de pages, les données de commande fournies par le processeur déterminant pour chaque trace d'inscription l'entrée de multiplexage, c'est-à-dire la source de donnée qui est reliée par le multiplexeur à une trace d'inscription et un comparateur de l'unité de tramage déterminent entre eux la sortie de signal du multiplexeur et un signal de tramage si la trace correspondante de l'organe d'inscription à traces multiples doit ou non être mise en oeuvre.

7. Installation selon la revendication 6, caractérisée en ce que le processeur est relié à un bus de données auquel sont raccordées une unité d'entrée pour l'information de maquette, une mémoire pour la commande du procédé et une mise en mémoire pour les informations de maquette qui arrivent et une unité d'adaptation de données et de mise en mémoire tampon pour l'enregistreur.

Schriftblock:
über Text-AV
eingeben

$M_1$

(Motiv 1)

$M_2$

(Motiv 2)

$M_4$

(Motiv 4)

$M_3$

(Motiv 3)

$d_1$
(Dichte 1)

(Verlauf 1)

$d_1$
(Dichte 1)

**HELL**

$d_2$
(Dichte 2)

Fig. 1     Kombinationen innerhalb einer Endseite

EP 0 264 405 B1

Vorschubrichtung

Umfangsrichtung

*Fig. 1a*

*Fig. 1b*

10

Konturdaten

| Winchester Drive | Floppy-Disk Drive | Rechner- Kopplung |

*4*     *5*     *1*

CPU *3*      *2*

Speicher *7*

Datenanpassung und -pufferung *6*

*9*

Bildeingang n → Recorder-Elektronik → Faseransteuerung m

*8*

## Fig. 2    <u>Blockschaltbild Recorder</u>

*9* Steuerdaten

*10*

Bild 1
Bildeingang
Bild n

Multi-plexer (pro Faser)

Dichte-geber *11*    Dichte

Verlaufs-geber *12*    Verlauf

$10_1$    $10_2$    $10_m$

m, 2, 1

$13_m$

Vergleicher (pro Faser)

$13_1$   $13_2$

1, 2 Faseran-steuerung

Rasterrechner *14*

## Fig. 3